## Europäisches Patentamt

## European Patent Office

## Office européen des brevets

(11) Veröffentlichungsnummer: **0 161 573**
**B1**

(12) # EUROPÄISCHE PATENTSCHRIFT

(45) Veröffentlichungstag der Patentschrift: **04.07.90**

(51) Int. Cl.⁵: **H 02 K 15/04**

(21) Anmeldenummer: **85105203.5**

(22) Anmeldetag: **29.04.85**

(54) **Verfahren und Vorrichtung zum Wickeln von Drahtspulen, insbesondere Feldspulen für elektrische Maschinen.**

(30) Priorität: **11.05.84 DE 3417469**

(43) Veröffentlichungstag der Anmeldung:
**21.11.85 Patentblatt 85/47**

(45) Bekanntmachung des Hinweises auf die
Patenterteilung:
**04.07.90 Patentblatt 90/27**

(84) Benannte Vertragsstaaten:
**CH DE FR GB IT LI**

(56) Entgegenhaltungen:
**DE-A-2 757 363**
**DE-A-3 101 117**
**DE-C- 864 714**
**US-A-4 367 774**

(73) Patentinhaber: **STATOMAT Spezialmaschinen GmbH**
**An der Rosenhelle 4**
**D-6369 Niederdorfelden (DE)**

(72) Erfinder: **Dröll, Hans**
**Nordring 75**
**D-6000 Frankfurt 60 (DE)**
Erfinder: **Muskulus, Willi**
**An der Pfaffenmauer 12**
**D-6000 Frankfurt 60 (DE)**

(74) Vertreter: **Jochem, Bernd, Dipl.-Wirtsch.-Ing.**
**Staufenstrasse 36 Postfach 17 41 09**
**D-6000 Frankfurt/Main (DE)**

Courier Press, Leamington Spa, England.

## Beschreibung

Die Erfindung betrifft ein Verfahren und eine Vorrichtung zum Wickeln von Drahtspulen, insbesondere Feldspulen für elektrische Maschinen, mittels einer rotierend antreibbaren Wickeldüse, welcher Wickeldraht von einer Vorratsspule zugeführt wird, deren Ende jeweils mit dem Anfang der nächsten Vorratsspule verbunden wird.

Verfahren der genannten Art sind in der DE-OS 28 08 048 und der DE-PS 1 051 770 beschrieben. Sie führen dazu, daß an der Wickeldüse die endliche Länge des Drahts einer Vorratsspule praktisch nicht in Erscheinung tritt, weil ihr ein ununterbrochener Draht zugeführt wird. Nachteilig ist jedoch, daß die für Beschädigungen besonders empfindlichen Stoßstellen zwischen den Drahtlängen der aufeinanderfolgenden Vorratsspulen in die Feldspulen geraten.

Die in der Praxis üblichen Verfahren versuchen diesen Nachteil dadurch zu vermeiden, daß nach dem Wickeln der letzten mit dem Draht einer bestimmten Vorratsspule zu bewickelnden Feldspule oder Feldspulengruppe das restliche Drahtende dieser Vorratsspule abgeschnitten und entfernt wird, und dann der Drahtanfang der nächsten Vorratsspule in den Drahtkanal zwischen deren Anschlußstelle und der Wickeldüse eingeführt wird. Dieser Arbeitsvorgang dauert bei großen Anlagen ca. fünf Minuten. Sind mehrere Wickelvorrichtungen derart miteinander verkettet, daß sie z.B. mit einer gemeinsamen Einziehvorrichtung zusammenarbeiten, welche die gewickelten Spulen gleichzeitig in einen Stator einzieht, summieren sich die Stillstandszeiten der verschiedenen Wickler, in denen jedesmal die gesamte verkettete Anlage stillsteht, bei drei Wicklern z.B. zu etwa 40 Min. pro 8-Stundenschicht, d.h. ca. 8 % der Arbeitszeit.

Zur Beschleunigung der Einführung des Drahts einer neuen Vorratsspule durch den Drahtführungskanal in die Wickeldüse ist es bekannt, den Draht mittels Druckluft oder Transportrollen von der Anschlußstelle aus durch den Drahtführungskanal zur Wickeldüse hin vorzuschieben (US-PS 3 967 658 und DE-OS 31 01 117). Auch dabei können jedoch je nach Länge und Krümmungen des Drahtführungskanals sowie der Drahtsteifigkeit Schwierigkeiten auftreten. Außerdem legt man dann wegen der schwierigen Drahteinfädelung die den Drahtzug während des Wickelns vergleichmäßigende, zur Vermeidung von Rucken erforderliche Drahtbremse an die Anschlußstelle, d.h. vor den Drahtführungskanal. Damit ist der weitere Nachteil verbunden, daß der Wickeldraht auf der gesamten Länge des Drahtführungskanals unter starker Zugkraft steht. Dadurch wird die Reibung im Drahtführungskanal vervielfacht, wodurch wiederum die erforderliche Zugkraft erhöht wird. Durch den starken Zug wird jedoch der Draht in unerwünschter Weise gereckt.

Der Erfindung liegt deshalb die Aufgabe zugrunde, ein Verfahren der eingangs genannten Art und eine zu dessen Durchführung geeignete Vorrichtung zu schaffen, welche gewährleisten, daß keine Stoßstellen zwischen Drähten verschiedener Drahtvorratsspulen in die gewickelten Spulen geraten, zusätzlich aber auch einen wesentlich schnelleren und zuverlässiger funktionierenden Drahtwechsel als die bisher praktizierten derartigen Verfahren gestatten.

Vorstehende Aufgabe wird dadurch gelöst, daß das Ende einer Vorratsspule vor der Verbindung mit der nächsten Vorratsspule um so viel gekürzt wird, daß die Verbindungsstelle nach dem Wickeln zwischen zwei gewickelten Spulen liegt.

Die erfindungsgemäße Vorrichtung zur Durchführung des vorstehend genannten Verfahrens besteht aus einer um eine Wickelschablone drehbaren Wickeldüse, einem von einer Anschlußstelle einer Drahtvorratsspule zur Wickeldüse führenden Drahtkanal bestimmter Länge und einer Meß- und Steuereinrichtung zur Abschaltung des Drehantriebs der Wickeldüse am Ende einer Vorratsspule und ist dadurch gekennzeichnet, daß die Wickeldüse durch die Meß- und Steuereinrichtung dann anhaltbar ist, wenn die Länge des Drahtkanals gleich der zur Vollendung einer Feldspule oder Feldspulengruppe benötigten Drahtlänge und die restliche Drahtlänge kürzer als die zum Wickeln der nächsten Feldspule oder Feldspulengruppe benötigte Drahtlänge ist. Die Meß- und Steuereinrichtung kann dabei z.B., wie in der DE-PS 22 53 053 beschrieben, ausgebildet sein.

Die Erfindung wird nachstehend anhand der Zeichnung näher erläutert. Diese zeigt:

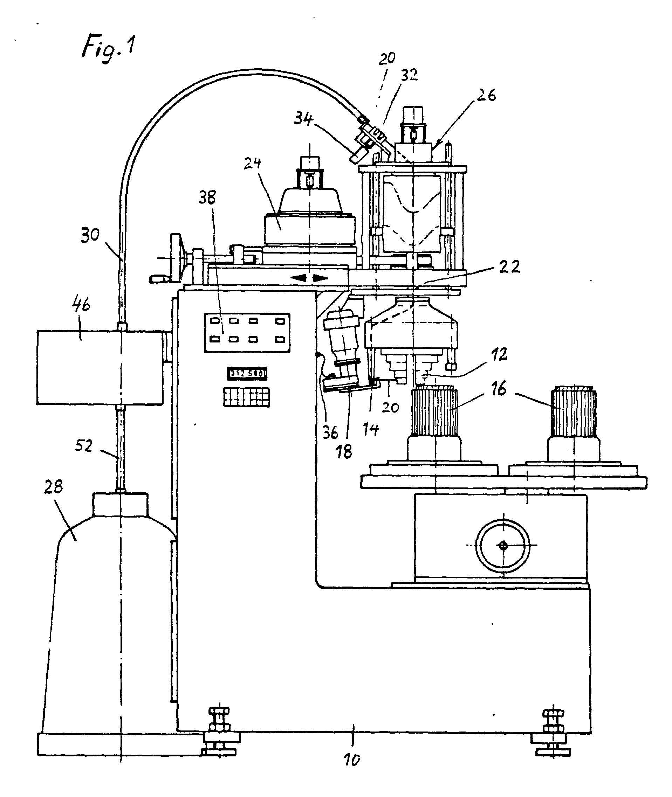

Fig. 1 eine Wickelvorrichtung zur Herstellung von Spulen für Statoren elektrischer Maschinen in Seitenansicht;

Fig. 2 eine Ansicht von links auf die in Fig. 1 dargestellte Wickelvorrichtung.

Wickelvorrichtungen der gezeigten Art sind in ihrem Aufbau und hinsichtlich der Funktion des Wickelns allgemein bekannt so daß nachstehend nur die wesentlichen Teile der Vorrichtung genannt werden. Diese besteht aus einem Ständer 10, welcher die Wickelwerkzeuge trägt. Dies sind im Beilspielsfall eine mehrstufige Wickelschablone 12, eine Wickelduse 14 (auch Flyer gennant) und mehrere Aufnehmer 16, die nacheinander unter die Wickelschablone 12 gefahren werden, um die dort erzeugten Feldspulengruppen zu empfangen und zu einer nicht gezeigten Einziehstation zu transportieren. Neben der Wickelschablone ist am Ständer 10 eine Klemm- und Abschneideinrichtung 18 angebracht, welche jeweils nach dem Wickeln einer Feldspulengruppe den Wickeldraht 20 zwischen Wickeldüse 14 und Wickelschablone 12 abschneidet und das zur Wickeldüse 14 führende Drahtende geklemmt hält, bis die ersten Windungen der nächsten Feldspulengruppe gewickelt worden sind.

Die während des Wickelvorgangs um die Schablone 12 kreisend Wickeldüse 14 sitzt fest an einer zentralen Wickelspine del 22, die durch einen Motor 24 angetrieben wird. Mit 26 ist insgesamt der Hubantrieb der Wickelschablone 12 und der zugehörigen, nicht gezeigten Drahtabstreifer bezeichnet.

Der Wickeldraht 20 wird auf genormten Lieferspulen angeliefert, die in Versandbehältern 28 sitzen. Der Draht 20 wird überkopf von den aufrechtstehenden Lieferspulen abgezogen und tritt durch eine obere zentrale Öffnung aus den Versandbehältern aus. Er wird dann durch einen Drahtkanal 30, an dem eine Drahtbremse 32 mit einem Stellantrieb 34 zur Anpassung an unterschiedliche Drahtdurchmesser und Erzeugung der gewünschten Bremskraft angeordnet ist, dem oberen Ende der hohlen Wickelspindel 22 zugeführt und erstreckt sich durch diese hindurch zur Wickeldüse 14.

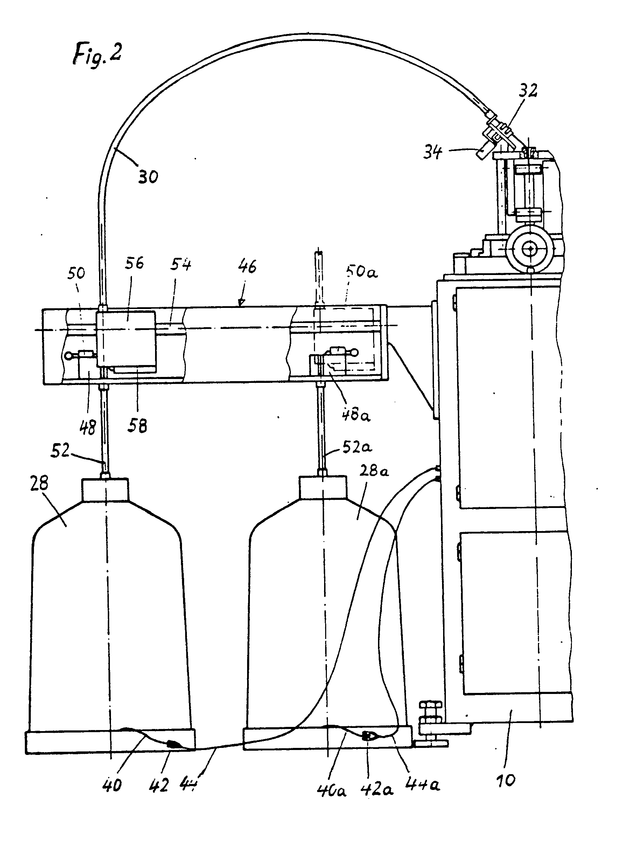

In bekannter Weise kann an der Klemm- und Abschneideinrichtung 18 ein elektrischer Kontakt angebracht sein, der jedesmal dann, wenn die Klemm- und Abschneideinrichtung den Draht 20 klemmt und schneidet, mit diesem an seinem vorderen Ende elektrisch leitend zur Berührung kommt. Der elektrische Kontakt an der Klemm- und Abschneideinrichtung 18 steht über eine elektrische Leitung 36 mit der Meß- und Steuereinrichtung 38 der Vorrichtung in Verbindung. An diese ist auch das hintere Drahtende 40 der Vorratsspule im Versandbehälter 28 über eine Klemme 42 und eine elektrische Leitung 44 angeschlossen (siehe Fig. 2). Die Meß- und Steuereinrichtung 38 ermittelt in bekannter Weise durch Messung des elektrischen Widerstands des Drahts 20 zwischen der Klemm- und Abschneideinrichtung 18 und der Klemme 42 die restliche Drahtlänge auf der Vorratsspule im Behälter 28.

Die im weiteren beschriebenen Maßnahmen und Teile der Vorrichtung dienen der erfindungsgemäß angestrebten Beschleunigung des Übergangs von einer Drahtvorratsspule zur nächsten. Zu diesem Zweck ist neben dem Standplatz für den Behälter 28 gemäß Fig. 2 ein weiterer Stellplatz für einen zweiten Behälter 28a mit einer weiteren Drahtvorratsspule vorgesehen. Auch das hintere Ende 40a der letzteren wird über eine Klemme 42a und eine elektrische Leitung 44a an die Meß- und Steuereinrichtung 38 angeschlossen. Unmittelbar über den Behältern 28 und 28a ist im Beispielsfall an einer mit dem Ständer 10 verbundenen Konsole 46 jeweils eine Halterung 48 bzw. 48a für das oben aus dem Behälter 28 bzw. 28a herausgeführte Drahtende sowie ein Drahtmesser 50 bzw. 50a angeordnet. Zwischen dem Behälter 28 bzw. 28a und der Drahthalterung 48 bzw. 48a kann der Draht z.B. in einem Rohr oder Schlauch 52 bzw. 52a geführt sein. An der Konsole 46 ist längs einer Führung 54 eine Drahtverbindeeinheit 56 zwischen den beiden Drahthalterungen 48 und 48a verfahrbar. Wegen der Beweglichkeit der Drahtverbindeeinheit 56 ist der an diese angeschlossene Drahtkanal 30 flexibel, z.B. ein Schlauch.

Während eine der beiden Vorratsspulen in den Behältern 28 oder 28a an die Wickeldüse 14 angeschlossen ist, wird jeweils bereits beizeiten der Behälter mit der nächsten Vorratsspule daneben gestellt und zum Anschluß vorbereitet. Dazu wird das hintere Drahtende 40 bzw. 40a an die Klemme 42 bzw. 42a angeschlossen und der Drahtanfang durch das Rohr 52 bzw. 52a hindurchgeführt und in der Drahthalterung 48 bzw. 48a festgelegt. Mit dem Drahtmesser 50 bzw. 50a wird der Drahtanfang beschnitten, so daß er eine genau definierte Lage in der Halterung 48 bzw. 48a einnimmt. Je nach der Art der gewählten Drahtverbindung kann der in der Halterung 48 bzw. 48a fixierte Drahtanfang auch schon auf den Verbindungsvorgang vorbereitet werden. Bekannte Drahtverbindungen sind die Stoß-Schweißverbindung, herzustellen z.B. mit Geräten der Firma Ideal, die Stoß-Lötverbindung, wie z.B. in der DE-OS 27 17 957 beschrieben, die Stoß-Quetschverbindung und die Parallel-Quetschverbindung mit Verbindungshülsen z.B. der Firma AMP, sowie die Verdrill-Verbindung. Im Falle einer Quetschverbindung wird die Verbindungshülse bereits zusammen mit dem Drahtanfang der nächsten Vorratsspule in der für die Verbindung vorbereiteten Lage in die Halterung 48 bzw. 48a eingelegt.

Der Übergang von einer Vorratsspule zur nächsten läuft dann wie folgt ab:

Nachdem die Meß- und Steuereinrichtung 38 beim Schneiden und Klemmen des Drahts 20 zwischen zwei Feldspulengruppen feststellt, daß die restliche Drahtlänge z.B. der Vorratsspule im Behälter 28 nur noch zum Wickeln einer vollständigen Feldspulengruppe, aber nicht mehr für zwei Feldspulengruppe ausreicht, läuft zunächst der Wickelvorgang für die nächste Feldspulengruppe ganz normal an. Ebenso wäre es, wenn nicht auf eine Stufenschablone mit mehreren Kammern gewickelt, sondern auf einer einzigen Schablonenkammer jeweils eine einzelne Feldspule gewickelt würde. Der Wickelvorgang wird jedoch schon vor Vollendung der Feldspulengruppe bzw. Feldspule unterbrochen, und zwar hält die Wickeldüse 14 dann an, wenn zur Vollendung der gerade gewickelten Feldspulengruppe bzw. Feldspule noch diejenige Drahtlänge fehlt, die sich zwischen der Wickeldüse 14 und der Anschlußstelle zwischen der Drahtverbindeeinheit 56 und der Halterung 48 in der Wickelspindel 22 und dem Drahtkanal 30 befindet. Würde man also jetzt mit einem an der Drahtverbindeeinheit 56 angebrachten Drahtmesser 58 den Draht an dieser Anschlußstelle durchtrennen und weiterwickeln, so würde die Feldspulengruppe oder Feldspule gerade vollendet, aber der dazu benötigte Draht aus dem Drahtkanal 30 und der Wickelspindel 22 herausgezogen werden.

Wegen der praktischen Schwierigkeiten beim Hindurchfädeln eines Drahtanfangs durch den Drahtkanal 30 und die Wickelspindel 22 wird bei der dargestellten Vorrichtung nach dem Abschneiden des nicht mehr für eine weitere Feldspulengruppe oder Feldspule ausreichenden hinteren Drahtendes der Vorratsspule im Behälter 28 mittels des Messers 58 die Drahtverbindeeinheit 56 zusammen mit dem Messer 58 und dem angeschlossenen flexiblen Drahtkanal 30 mit Bezug auf Fig. 2 nach rechts zur Halterung 48a verfahren. Weil dort der Drahtanfang der im Behälter 28a enthaltenen neuen Vorratsspule, evtl. zusammen mit einer Quetschhülse, in vorbe-

stimmter Lage bereit gehalten wird und auch das hintere Drahtende der letzten Vorratsspule nach dem Abschneiden mittels des Messers 58 eine genau bestimmte Lage in der Drahtverbindeeinheit 56 einnimmt, können die beiden Drahtenden in wenigen Sekunden genau positioniert zusammengebracht und miteinander verbunden werden. Auch die Wickelvorrichtung und zusammen mit ihr weitere verkettete Maschinenanlagen brauchen wegen des Drahtwechsels nur wenige Sekunden angehalten zu werden.

Es wird bereits eine we entlich Verkürzung der Stillstandszeiten der Wickelvorrichtung erreicht, wenn die Drahtverbindeeinheit 56 nach dem selbsttätigen Anhalten der Wickeldüse am Ende einer Vorratsspule von Hand aus der Position über dieser Vorratsspule zu der daneben plazierten neuen Vorratsspule verfahren wird. Vorzugsweise sollte jedoch auch dieser Vorgang automatisch ablaufen nämlich derart daß die Draht verbindeeinheit 56 durch einen nicht gezeigten Stellantrieb zwischen den beiden Halterrungen 48 und 48b abwechselnd hin und her verfahren wird. Dann braucht die Bedienungsperson, die normalerweise noch andere Funktionen zu überwachen und Arbeiten auszuführen hat, jeweils nur irgendwann in der verhaltiusmäßig langen Zeitspanne, während eine Vorratsspule abgewikkelt wird, daneben eine neue Vorratsspule aufzustellen und deren Drahtanfang in der Halterung 48 bzw. 48a zu fixieren. Während dieser Arbeiten braucht der Wickelvorgang nicht unterbrochen zu werden.

Wie in der Zeichnung gezeigt, kann die Drahtbremse 32 am hinteren Ende des Drahtkanals 30 angeordnet sein, weil der Drahtanfang einer neuen Vorratsspule nicht durch den Drahtkanal 30 mühsam hindurchgeschoben, sondern durch das hintere Drahtende des vorher verarbeiteten Drahtvorrats durch den Drahtkanal 30 gezogen wird.

Bei dem vorstehend beschriebenen Arbeitsverfahren ist auch nicht zu befürchten daß später an den Stoßstellen der Drähte von den verschiedenen Vorratsspulen Schäden auftreten denn die Stoßstellen liegen jeweils am Übergang zwischen zwei nacheinander gewickelten Feldspulengruppen bzw. Feldspulen. Dort wird der Draht mittels der Klemm- und Abschneidvorrichtung 18 geschnitten. Der Schnitt erfolgt demnach an oder unmittelbar neben der Stoßstelle. Da die hierbei gebildeten Drahtenden ohnehin für die elektrischen Anschlüsse der Spulen gebraucht werden, ergeben sich keine weiteren Komplikationen.

Die Erfindung ist vorstehend nur beispielhaft an einer Wickelvorrichtung zur Herstellung von Feldspulen für Statoren elektrischer Maschinen beschrieben worden. Sie eignet sich jedoch generell zur Herstellung von Feldspulen in dem allgemeinen Sinn, daß darunter sämtliche Wicklungen verstanden werden sollen, die ein elektrisches Feld erzeugen oder sich in einem elektrischen Feld bewegen, insbesondere Rotorwicklungen. Daneben könnten auch sonstige Drahtwicklungen infrage kommen.

Es versteht sich weiterhin, daß das beschriebene erfindungsgemäße Verfahren unabhängig ist von der im Einzelfall gewählten Wickelvorrichtung, der Art, Anzahl und Ausbildung der Wickelwerkzeuge, dem Drahtlängen-Meßverfahren und der Anzahl der in Wartestellung bereitgestellten Vorratsspulen. So könnten z.B. zur kontinuierlichen Messung der restlichen Drahtlänge auf den Vorratsspulen diese auf Waagen aufgestellt sein, wobei aus dem gemessenen Drahtgewicht die Drahtlänge berechnet würde.

Wie sich bereits aus der oben genannten Aufzählung bewährter Drahtverbindungen ergibt, ist die Erfindung auch auf kein spezielles Verbindungsverfahren festgelegt. Es versteht sich, daß Drahtverbindungen, die zu einer gegenüber dem Drahtdurchmesser dickeren Stoßstelle führen, das vorübergehende Öffnen der Drahtbremse 32 mittels ihrer Betätigungsvorrichtung 34 bedingen, um die Stoßstelle passieren zu lassen. Außerdem ist die erfindungsgemäße Vorrichtung nicht darauf beschränkt, daß die Drahtverbindeeinheit 56 zwischen den Drahthalterungen 48 und 48a verfährt. Es könnte auch umgekehrt vorgesehen sein, daß die Drahtverbindeeinheit feststeht und die mit flexiblen Schläuchen 52 bzw. 52a verbundenen Haltevorrichtungen 48 und 48a abwechselnd an die Drahtverbindeeinheit herangefahren werden.

**Patentansprüche**

1. Verfahren zum Wickeln von Drahtspulen, insbesondere Feldspulen für elektrische Maschinen, mittels einer rotierend antreibbaren Wickeldüse (14), welcher Wickeldraht (20) von einer Vorratsspule zugeführt wird, deren Ende jeweils mit dem Anfang der nächsten Vorratsspule verbunden wird, dadurch gekennzeichnet, daß das Ende einer Vorratsspule vor der Verbindung mit der nächsten Vorratsspule um so viel gekürzt wird, daß die Verbindungsstelle nach dem Wikkeln zwischen zwei gewicelten Spulen liegt.

2. Verfahren nach Anspruch 1, dadurch gekennzeichnet, daß die restliche Drahtlänge der ersten Vorratsspule kontinuierlich oder in Intervallen gemessen und während des Wickelns einer Feldspule die rotierende Wickeldüse (14) angehalten wird, wenn sich zwischen ihr und der Stelle im Raum, an welcher der Wickeldraht (20) geschnitten wird, die zur Vollendung der Feldspule oder Feldspulengruppe benötigte Drahtlänge befindet und die restliche Drahtlänge kürzer ist als für die nächste Feldspule oder Feldspulengruppe erforderlich, dann die restliche Drahtlänge abgeschnitten und der Drahtanfang der nächsten Vorratsspule mit dem zur unvollendeten Feldspule führenden Drahtende verbunden wird.

3. Verfahren nach Anspruch 2, dadurch gekennzeichnet, daß schon bevor eine Vorratsspule zu Ende geht, der Anfang der nächsten Vorratsspule zur Verbindung vorbereitet und in bestimmter Lage bereitgehalten wird, und das zur unvollendeten Feldspule führende gekürzte Drahtende an den vorbereitet gehaltenen Drahtanfang der nächsten Vorratsspule herangeführt und mit diesem verbunden wird.

4. Verfahren nach einem der Ansprüche 1 bis 3 dadurch gekennzeichnet, daß am Ende des Wickelns der letzten aus einer Vorratsspule erzeugten Feldspule der Draht (20) zwischen dieser und der nächsten Feldspule unmittelbar an oder neben der Verbindungsstelle geschnitten wird.

5. Vorrichtung zur Durchführung des Verfahrens nach einem der Ansprüche 1 bis 4, bestehend aus einer um eine Wickelschablone (12) drehbaren Wickeldüse (14), einem von einer Anschlußstelle einer Drahtvorratsspule zur Wickeldüse führenden Drahtkanal (30) bestimmter Länge und einer Meß- und Steuereinrichtung (38) zur Abschaltung des Drehantriebs der Wickeldüse am Ende einer Vorratsspule, dadurch gekennzeichnet, daß die Wickeldüse (14) durch die Meß- und Steuereinrichtung (38) dann anhaltbar ist, wenn die Länge des Drahtkanals (30, 22) gleich der zur Vollendung einer Feldspule oder Feldspulengruppe benötigten Drahtlänge und die restliche Drahtlänge kürzer als die zum Wickeln der nächsten Feldspule oder Feldspulengruppe benötigte Drahtlänge ist.

6. Vorrichtung nach Anspruch 5 mit einer Drahtbremse, dadurch gekennzeichnet, daß sich die Drahtbremse (32) in an sich bekannter Weise an oder unmittelbar neben einer die Wickeldüse (14) tragenden Wickelspindel (22) oder einer zu dieser konzentrischen Hohlwelle befindet.

7. Vorrichtung nach Ansprüche 5 oder 6 dadurch gekennzeichnet, daß das Einlaßende des Drahtkanals (30) zwischen wenigstens zwei ortsfesten An-Schlußstellen (48, 48a) von Drahtvorratsspulen bewegbar ist.

## Revendications

1. Procédé pour enrouler des bobines de fils métalliques, notamment des bobines d'excitation de machines électriques au moyen d'une filière de bobinage (14), entraînable en rotation, à laquelle du fil de bobinage (20) est amené d'une bobine d'alimentation, dont l'extrémité est respectivement reliée au début de la bobine d'alimentation suivante, caractérisé en ce que l'extrémité d'une bobine d'alimentation est, avant la fonction avec la bobine d'alimentation suivante, raccourcie d'une longueur telle que le point de jonction après l'enroulement se situe entre deux bobines enroulées.

2. Procédé selon la revendication 1, caractérisé en ce que la longueur de fil résiduelle de la première bobine d'alimentation est mesurée en continu ou par intermittences et en ce que, pendant l'enroulement d'une bobine d'excitation, la filière de bobinage (14) rotative est arrêtée lorsque se trouve entre elle et l'endroit de l'espace où est sectionné le fil à enrouler la longueur de fil nécessaire pour achever la bobine d'excitation ou le groupe de bobines d'excitation et en ce que la longueur de fil résiduelle est plus courte que nécessaire pour la bobine d'excitation ou le groupe de bobines d'excitation venant à la suite, la longueur de fil résiduelle étant ensuite sectionnée et le début du fil de la bobine d'alimentation suivante étant relié à l'extrémité du fil menant à la bobine d'excitation incomplète.

3. Procédé selon la revendication 2, caractérisé en ce qu'avant qu'une bobine d'alimentation arrive à sa fin, le début de la bobine d'alimentation suivante est préparé pour la jonction et est tenu disponible dans une position déterminée et en ce que l'extrémité de fil raccourcie menant à la bobine d'excitation incomplète est amenée au début de fil tenu préparé de la bobine d'alimentation suivante et est reliée à celui-ci.

4. Procédé selon l'une des revendications 1 à 3, caractérisé en ce qu'à l'extrémité de l'enroulement de la dernière bobine d'excitation produite avec une bobine d'alimentation, le fil (20) est sectionné entre celle-ci et la bobine d'excitation suivante au point même de jonction ou à côté de celui-ci.

5. Dispositif pour l'exécution du procédé selon l'une des revendications 1 à 4, constitué par une filière de bobinage (14) pouvant tourner autour d'un gabarit d'enroulement (12), par un canal de fil (30) d'une longueur déterminée menant d'un endroit de raccordement d'une bobine d'alimentation en fil à la filière de bobinage et par un dispositif de mesure et de commande (38), destiné à l'arrêt de l'entraînement en rotation de la filière de bobinage à la fin d'une bobine d'alimentation, caractérisé en ce que la filière de bobinage (14) peut être arrêtée par le dispositif de mesure et de commande (38), lorsque la longueur du canal de fil (30, 22) est égale à la longueur de fil nécessaire pour l'achèvement d'une bobine d'excitation ou d'un groupe de bobines d'excitation et en ce que la longueur de fil résiduelle est plus courte que la longueur de fil nécessaire pour le bobinage de la bobine d'excitation ou du groupe de bobines d'excitation venant à la suite.

6. Dispositif selon la revendication 5 avec un frein de fil, caractérisé en ce que le frein de fil (32) se trouve, de manière connue en soi, sur ou immédiatement à côté d'une broche d'enroulement (22) portant la filière de bobinage (14) ou sur un arbre creux concentrique à celle-ci.

7. Dispositif selon la revendication 5 ou 6, caractérisé en ce que l'extrémité d'entrée du canal de fil (30) est déplaçable entre au moins deux points de raccordement fixes (48, 48a) de bobines d'alimentation en fil.

## Claims

1. A method for the winding of wire coils, especially field coils for electrical machines, by means of a rotatably drivable flyer (14), the winding wire (20) being fed by a supply reel of which the end is in each case connected to the beginning of the next supply reel, characterised in that the end of one supply reel before the connection with the next supply reel is shortened by such an amount that the junction after the winding lies between two wound coils.

2. A method according to claim 1, characterised in that the remaining length of wire of the first supply reel is measured continuously or at intervals, and, during the winding of a field coil, the rotating flyer is stopped if the length of wire required for completion of the field coil or group of field coils lies between the flyer and the point in space at which the winding wire (20) is cut and the remaining length of wire is shorter than is necessary for the next field coil or group of field coils, then the remaining length of wire is cut off and the beginning of the wire of the next supply reel is connected to the end of the wire leading to the incomplete field coil.

3. A method according to Claim 2, characterised in that before a supply reel comes to an end, the beginning of the next supply reel is prepared for connection and is held ready in a determined position, and the shortened end of the wire leading to the incomplete field coil is brought up to the beginning of the wire held ready and is connected to this.

4. A method according to any one of claims 1 to 3, characterised in that, at the end of the winding of the last field coil produced from a supply reel, the wire is cut between this and the next field coil directly at or adjacent the junction.

5. A device for carrying out the method according to any one of claims 1 to 4, comprising a flyer (14) rotatable about a winding former (12), a wire duct (30) of determined length leading from a connection point of a wire supply reel to the flyer, and a measurement and control device (38) for switching off the rotary drive of the flyer at the end of a supply reel, charactersed in that the flyer (14) can be stopped by the measurement and control device (38) when the length of the wire duct (30, 22) is equal to the length of wire necessary for completion of a field coil or group of field coils and the remaining length of wire is shorter than the length of wire required for winding of the next field coil or group of field coils.

6. A device according to claim 5 with a wire brake, characterised in that the wire brake (32) is located in a manner known in itself at or directly adjacent a winding spindle or a hollow shaft concentric therewith.

7. A device according to claim 5 or 6, characterised in that the inlet end of the wire duct (30) is movable between at least two fixed connection points (48, 48a) for wire supply reels.

Fig.1

Fig. 2